# EUROPEAN PATENT SPECIFICATION

(11) **EP 3 064 949 B1**
(45) Date of publication and mention of the grant of the patent: **13.02.2019**
(21) Application number: 16000541.9
(22) Date of filing: 07.03.2016
(51) Int. Cl.: G01P 5/12, G01F 1/684, F24F 13/28, F24F 3/16, F24F 7/007, F24F 11/00, F24F 11/30, G01F 15/06, F24F 110/00, F24F 110/30, F24F 11/74, F24F 110/50, G01F 15/075

(54) **APPARATUS FOR EXTRACTING AND FILTERING ASBESTOS AND ASSOCIATED METHOD**
VORRICHTUNG ZUM ABSAUGEN UND FILTERN VON ASBEST UND ZUGEHÖRIGES VERFAHREN
APPAREIL D'EXTRACTION ET DE FILTRAGE D'AMIANTE ET PROCÉDÉ ASSOCIÉ

(30) Priority: 06.03.2015 GB 201503880
(43) Date of publication of application: 07.09.2016
(73) Proprietor: Beacon International Limited, Northamptonshire NN14 2LX (GB)
(72) Inventor: Gravener, Raymond, Desborough, Northramptonshire NN14 2NP (GB)
(74) Representative: Franks & Co (South) Limited

(56) References cited:
- WO-A1-99/49284
- US-A- 4 786 295
- US-A1- 2007 275 651
- US-A1- 2008 198 896
- US-A1- 2013 197 829
- US-B1- 6 439 061
- US-B1- 8 186 230

## Description

The present invention relates to equipment for maintaining a region at below atmospheric pressure, and methods and equipment for monitoring its effectiveness and efficiency. More particularly and exclusively, it relates to negative pressure units for use during asbestos removal work, and to equipment and methods for ensuring their consistent operation.

Asbestos-based construction materials were widely used in the past, because of their fire resistance properties. However, the serious health risks involved with asbestos fibres are now well known. Whenever construction or demolition work is being carried out on buildings containing asbestos-based materials, all such materials must be removed under controlled and regulated conditions, by licenced and regulated contractors, to ensure that neither those carrying out the work nor the general public are exposed to asbestos dust.

The general practice is to separate a region to be worked on from a surrounding building, using heavy plastics sheeting to create a temporary enclosure which is maintained at a below-ambient atmospheric pressure. This ensures that clean air can flow into the region from outside, but that no outflows laden with dust and/or asbestos fibres may leak out. To produce the reduced atmospheric pressure, equipment known as "Negative Pressure Units" (NPUs) has been used for about the last 30-40 years. NPUs are based on technology adapted from air conditioning units, and have changed little, technically, since their introduction. Each NPU comprises a fan and two filters, a pre-filter followed by a HEPA (High-Efficiency Particulate Arrester) filter. Both filters are located upstream of the fan.

In the UK, the HSE requirement is that the under-pressure in the enclosure must be maintained at 500 Pascals with an airflow volume of 1000m³/hour. This should produce the eight to ten complete changes of air within the enclosure that is required by UK legislation. For each enclosure, the contractors need to calculate these values and provide one or more NPUs, coupled to the enclosure, with the necessary capacity to ensure that these airflows can be maintained.

In existing NPUs, airflow through the units is not monitored on a continuous basis. An operator may take several spot air velocity readings at the NPU inlet with a conventional handheld vane anemometer. These readings are averaged to give a mean air velocity into the NPU in meters per second, from which a volumetric air flow through the NPU can be calculated, knowing the area of the inlet. These measurements are not particularly accurate, can only be carried out periodically, and require a trained operator to carry out.

A recent development has been the introduction of a pressure gauge into NPUs. The objective of this is to establish when the filters need to be changed. Both the pre-filter and the HEPA filter will gradually block and blind with time, restricting airflow through them and risking airflow volumes falling below required levels. The existence of a significant pressure drop across the filters indicates significant blockage, but this is only a very crude method of detecting filter blockage, and cannot distinguish between the pre-filter and the HEPA filter. The indication of blockage is imprecise, and may be too early or too late. In most cases, the licenced asbestos removal contractor is only able to change the pre-filter on site. However, there eventually comes a time when the HEPA filter will become blocked, which can only by changed by the NPU manufacturer, off site - a HEPA filter cannot be changed on-site or by the licenced contractor. Thus, a replacement NPU would need to be provided, or work suspended until the existing NPU is fixed and returned.

Additionally, construction workers and demolition workers in particular are notorious for their "robust" handling of equipment, and for evading or defeating safety equipment to save time or effort in the short term. For example, a log can be kept of NPU performance over a shift, but there is anecdotal evidence that logs demonstrating continued high performance and absence of blockages can be generated by operating the NPU off site after work.

There is also a drive by the HSE for more accurate monitoring of such temporary enclosures. The Asbestos Removal Guidance for Licensed Removal Contractors has been updated last year (2015) and changes to the overall UK legislation are planned for later this year (2016). All work must comply with British Standard BS8520. Thus, there is a market need for relevant improvements, not only in OEM equipment but also for upgrading existing equipment, where complete replacement is uneconomic.

There are hence several aspects of the operation of Negative Pressure Units and associated equipment that would benefit from improvements. An accurate continuous determination of the performance and effectiveness of a Negative Pressure Unit at any one moment is required, either as equipment integral to the Negative Pressure Unit or in the form of equipment to be used externally to test existing Negative Pressure Units. Additionally, it would be beneficial for the results of such monitoring to be available off-site, including to external regulatory agencies, to enable monitoring for compliance with the safety requirements set up in advance for a particular piece of asbestos removal work. It is also believed that Negative Pressure Units or similar equipment are used in a range of other industries, and similar issues with reliable continuous performance monitoring are likely to arise there, too.

Patent document US-A-2008/196896 discloses an exemplary apparatus for filtering air comprising means to extract air from a working enclosure, air filter means, and at least one airflow sensor means arranged to measure a local airflow velocity at a point in an outflow of said air filter means.

It is hence an object of the present invention to provide apparatus and a method for continuously monitoring the performance of a Negative Pressure Unit or similar equipment; to provide Negative Pressure Units and similar equipment with such monitoring apparatus built-in; and to provide methods and apparatus for logging and reporting the performance of Negative Pressure Units and similar equipment, all of which obviate the above drawbacks of existing systems.

According to a first aspect of the present invention, there is provided apparatus for extracting and filtering asbestos from air from within a working enclosure according to claim 1.

Preferably, said apparatus comprises a single said airflow sensor means arranged to measure the local airflow velocity at a preselected representative point in the outflow of said filter means.

Advantageously, said single airflow sensor means is located in the outflow of the filter means at a point between a centreline and a periphery of the outflow.

Optionally, said single airflow sensor means is located at a point closer to said periphery of the outflow than to said centreline of the outflow.

Alternatively, said apparatus comprises a plurality of airflow sensor means, arrayed to measure local airflow velocities at a plurality of points extending across the outflow of the filter means, and means to calculate an average airflow velocity from said local airflow velocities and to calculate the overall volumetric airflow through the apparatus from said average airflow velocity.

Preferably, said filter means comprises pre-filter means and High Efficiency Particulate Arrestance (HEPA) filter means.

Advantageously, an airflow through the apparatus passes through the pre-filter means prior to passing through the HEPA filter means.

An outflow of the HEPA filter means may comprise a plurality of elongate aperture means, extending each in parallel with the others.

The outflow of the HEPA filter means may be provided with sensor support plate means having a plurality of elongate aperture means corresponding to the aperture means of the HEPA filter means, the or each airflow sensor means being so mounted to the sensor support plate as to be located in or adjacent one said aperture means of the plate means.

The sensor support plate means may be provided with a plurality of laminar flow breakers, optionally extending along elongate edges of each elongate aperture means and generally parallel to the airflow, adapted to encourage laminar airflow outward of the HEPA filter means in preference to turbulent airflow.

The airflow sensor means may alternatively be mounted to the HEPA filter means and/or its mountings, so as to be located in or adjacent one said aperture means of the HEPA filter means.

Preferably, the means to extract air from the working enclosure comprise extractor fan means.

Optionally, the means to extract air from the working enclosure may comprise a plurality of extractor fan means.

Said plurality of extractor fan means may be operable separately or together so as to provide sufficient suction to generate a desired total airflow.

The apparatus is preferably provided with one or more shutter means, respectively associated with the or each extractor fan means, adapted to seal an outflow of the extractor fan means against inflow of air when the extractor fan means is not in operation.

The or each said shutter means may be mounted to deflect outwardly in an outflow from a respective extractor fan means, but to be biased to close sealingly in the absence of said outflow.

Preferably, the apparatus comprises alarm means, adapted to indicate when the overall volumetric flow through the apparatus falls below a predetermined safety level.

Advantageously, the apparatus is provided with display means, adapted to display data including the overall volumetric flow through the apparatus.

Preferably, the airflow sensor means comprise hot-film anemometer means.

Alternatively, the airflow sensor means may comprise hot-wire anemometer means.

According to a second aspect of the present invention, there is provided a method of measuring volumetric airflow through apparatus for extracting and filtering air from within a working enclosure, said apparatus comprising filter means through which said air is passed, comprising the steps of providing at least one airflow sensor means arranged to measure local airflow velocity at a point in an outflow of said filter means; and calculating an overall volumetric airflow through the apparatus from said local airflow velocity.

Preferably, the method comprises the steps of providing a single said airflow sensor means arranged to measure the local airflow velocity at a preselected representative point in the outflow of said filter means; and calculating the overall volumetric airflow through the apparatus from said local airflow velocity.

Advantageously, the method comprises an initial step of providing a plurality of airflow sensor means arranged to measure local airflow velocities at a plurality of points extending across the outflow of said filter means; calculating an average airflow velocity from said local airflow velocities at said plurality of points and calculating the overall volumetric airflow from said average airflow velocity.

Optionally, the method may comprise the step of comparing the average airflow velocity with each local airflow velocity at each of said plurality of points extending across the outflow of the filter means, and thereby selecting said representative point as having a local airflow velocity most representative of the average airflow velocity.

Preferably, the method comprises the step of providing apparatus as described in the first aspect above.

According to a third exemplary aspect not included in the scope of the present invention, there is provided equipment for testing and calibrating apparatus for extracting and filtering air from within a working enclosure, comprising at least one airflow sensor means arranged to measure local airflow velocity at a point located in an outflow of filter means of said apparatus; and means to determine from said local airflow velocity an overall volumetric airflow through the apparatus.

Preferably, the equipment comprises a single airflow sensor means arranged to measure the local airflow velocity at a preselected representative point in the outflow of the filter means of said apparatus.

The equipment may comprise data display means mountable externally to the apparatus to be tested, and optionally alarm means.

According to a fourth exemplary aspect not included in the scope of the present invention, there is provided apparatus for extracting and filtering air from within a working enclosure, comprising means to extract air from said working enclosure, and filter means through which said air is passed; further comprising shutter means associated with the or each extraction means of the apparatus and adapted to close and seal an outlet means of said extraction means against air flowing inwardly through the outlet means.

Embodiments of the present invention will now be more particularly described, by way of example and with reference to the accompanying drawings, in which:
**Figure 1** is a schematic perspective view of an exterior of a typical working enclosure, within which the removal of asbestos-containing structural materials is to take place, with Negative Pressure Units installed;
**Figure 2** is a schematic lateral cross-section of a first Negative Pressure Unit comprising a first embodiment of the present invention;
**Figure 3** is a frontal elevation of an airflow sensor support plate from the first Negative Pressure Unit of Figure 2;
**Figure 4** is a frontal elevation of an alternative airflow sensor support arrangement from the first Negative Pressure Unit of Figure 2;
**Figure 5** is a schematic lateral cross-section of a second Negative Pressure Unit comprising a third embodiment of the present invention;
**Figure 6A** is a frontal elevation of an external outlet of the first Negative Pressure Unit of Figure 2;
**Figure 6B** is a scrap lateral cross-section of the external outlet of the first Negative Pressure Unit shown in Figure 6A;
**Figure 7A** is a frontal elevation of an external outlet of the second Negative Pressure Unit of Figure 5;
**Figure 7B** is a scrap lateral cross-section of the external outlet of the second Negative Pressure Unit shown in Figure 7A;
**Figure 8A** is a frontal elevation of an instrument enclosure comprising a fourth embodiment of the present invention, mounted to a Negative Pressure Unit; and
**Figure 8B** is a side elevation of the instrument enclosure of Figure 8A, mounted to a Negative Pressure Unit.

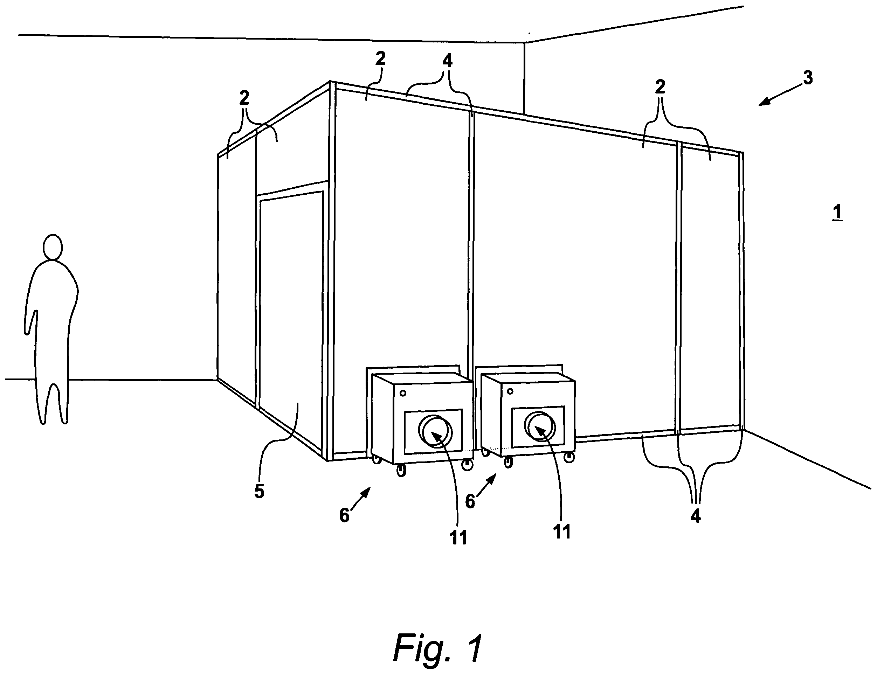

Referring now to the Figures and to Figure 1 in particular, asbestos-containing structural or insulating material is being removed from a building 1. Multiple sheets 2 of heavy-duty polyethylene have been assembled to form a temporary working enclosure 3, within which work on the asbestos-containing materials is carried out. The working enclosure 3 is made as airtight as possible by fastening and sealing all joints with adhesive tape 4. A sealable entry/exit door 5 for the working enclosure 3 is provided, as may clear plastics windows (not shown) inserted into the polyethylene sheets 2 that form walls of the working enclosure 3.

In order to create the required underpressure within the working enclosure 3 and to generate the necessary changes of air per hour within the working enclosure 3, a pair of Negative Pressure Units (NPUs) 6 has been installed, each extending through a wall of the working enclosure 3, with an inlet 7 (not shown in this view) opening within the working enclosure 3 and a remainder of the NPU 6 located outside the working enclosure 3. Each NPU 6 is also sealed to a respective wall of the working enclosure 3 with tape 4.

The NPUs 6 suck air out of the working enclosure 3, creating the required underpressure. Air from outside the working enclosure 3 will flow via inevitable openings and cracks into the working enclosure 3 to produce the required air changes within the working enclosure 3. The number and capacity of the NPUs 6 is calculated in advance, so that they will provide the required air flow volume - as long as they remain unblocked and operating as planned.

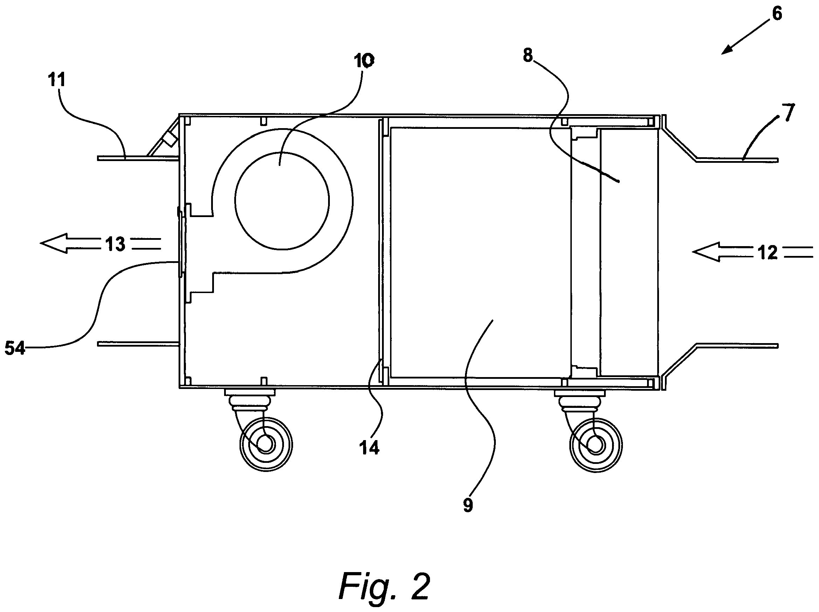

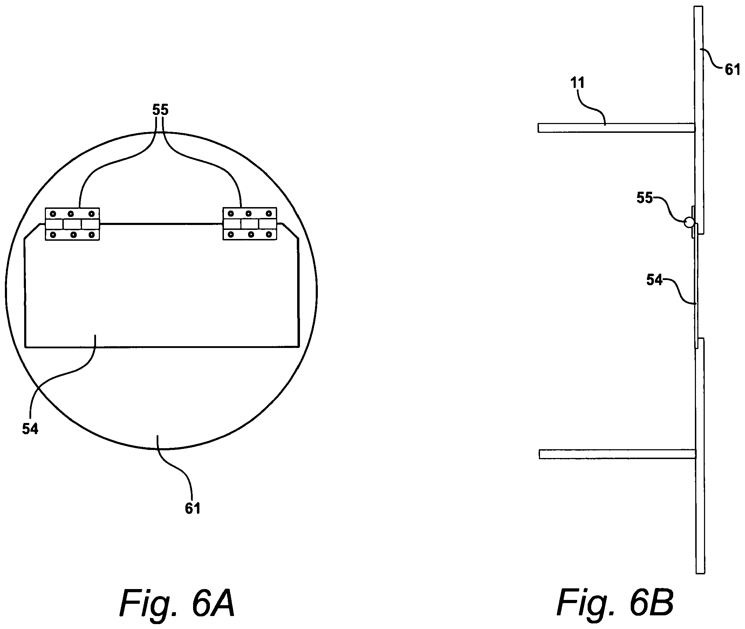

Figure 2 shows a cross-section of a first NPU 6 that is of largely conventional form, but which is fitted with a suite of airflow sensors, thus comprising a first embodiment of the present invention. An inlet 7 (located within the working enclosure 3 in Figure 1) leads an inwards airflow 12 to a pre-filter 8. The airflow 12 passes through the pre-filter 8, which traps the larger airborne particulates; it then passes through the HEPA filter 9, which captures finer airborne particulates, and in particular any asbestos fibres released into the atmosphere as a result of activities within the working enclosure 3. Downwind of the HEPA filter 9 is a fan 10 which provides the suction to draw air through the NPU 6. The fan 10 projects an outwards airflow 13 from an outlet 11 of the NPU 6, the outlet 11 being located externally of the working enclosure 3. (The outlet 11 is also provided with a shutter 54 arrangement which is described in detail below, in respect of Figures 6A and 6B).

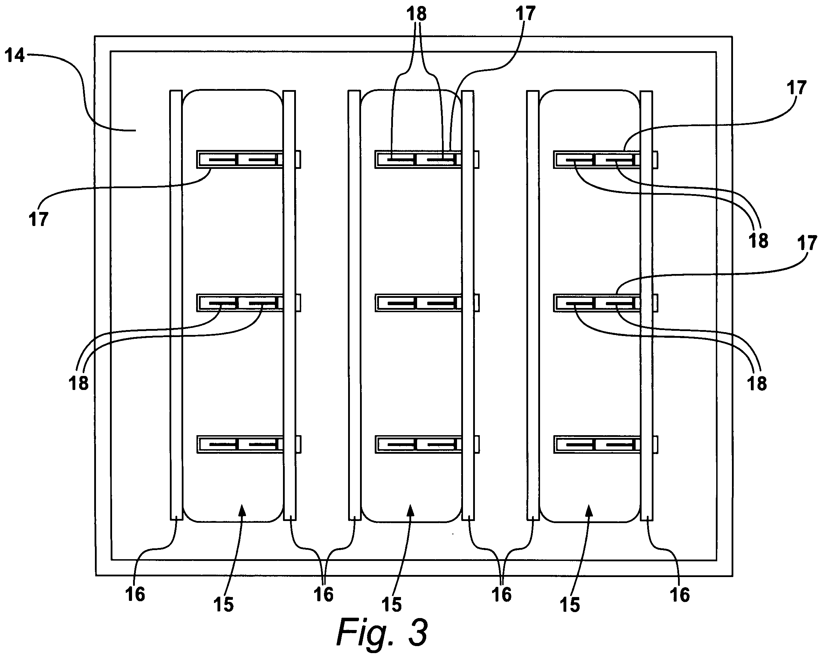

This particular NPU 6 of the present invention is distinguished from prior art NPUs by the presence of an airflow sensor support plate 14, mounted adjacent an outflow of the HEPA filter 9, upwind of the fan 10. This plate 14 is shown in more detail in Figure 3.

The particular airflow sensor support plate 14 illustrated in Figure 3 is provided with three elongate apertures 15, each of which is configured to match a corresponding outflow aperture of a standard configuration of HEPA filter 9. To ensure that airflow passing out of the HEPA filter 9 is as constant and regular as possible, this airflow sensor support plate 14 is fitted with laminar flow breakers 16. These extend outwardly from the plate 14, along each longitudinal edge of each elongate aperture 15. Thus, the airflow passing through the elongate apertures 15 should be close to laminar flow at a constant velocity, with turbulence avoided or minimised.

Three sensor supports 17 extend orthogonally from one longitudinal edge of each elongate aperture 15 towards the opposite longitudinal edge. Within each elongate aperture 15, one sensor support 17 is located near (but not at) each end of the aperture 15, while the third sensor support 17 is located adjacent a midpoint of the aperture 15.

Each sensor support 17 bears a pair of hot film thermistor airflow sensors 18, also known as hot-film anemometers, which are thus held in a regular array across an entire width of the airflow emerging from the HEPA filter 9.

This provides multi-point air velocity measurements using very small sensors. The hot film thermistor sensors 18 have no moving parts and produce reliable, reproducible results. Hot-wire thermistor airflow sensors have been tried with some success, but the hot-film airflow thermistor sensors 18 provide better performance. The very small sensor 18 size means that they can be located in places where conventional anemometer air velocity meters cannot be positioned. Thus, air flow velocities can be measured in regions of the airflow previously overlooked or which had to be neglected. Also, their small size means that the sensors 18 do not obstruct the airflow to the extent seen with larger anemometers, thus producing more authentic, accurate and repeatable readings. The multipoint measurements also allow a flow pattern across much of the height and width of the NPU 6 to be determined rapidly. Although the airflow/voltage relationship tends to be non-linear in the sensors 18 themselves, particularly towards the higher velocities, it is now known to connect the sensors 18 into "linearising" circuits, which lead to a response that is close to linear across much of the velocity range.

A particularly suitable example of such a sensor 18 is the EE671 HVAC Miniature Air Flow Transmitter from the German firm E+E Elektronik, which can be obtained to measure airflow velocity ranges of 0-5, 0-10, 0-15 or 0-20 meters per second by producing output signals in the 0-1V, 0-5V or 0-10V ranges. They are accurate to within 3% in the slowest airflow ranges, or to within 6% at the highest airflow ranges. (An error of ±10% is currently considered acceptable in the respective standards).

An averaged signal from all the sensors 18 is fed to a digital panel meter mounted to an existing instrument panel of the NPU 6, or alternatively individual signals from each of the sensors 18 are sent to the digital panel meter, where they are averaged. Ambient pressure, humidity and static pressure within the NPU 6 are all factored into the calculations, as well as the average airflow velocity measured across the outflow of the HEPA filter 9, to provide an accurate reading of the local environment and particularly the volumetric airflow through the NPU 6 system. The digital panel meter will for example provide a readout of air velocity and of air flow volumes as selected.

This first embodiment of the present invention provides operators with a continuous monitoring capability to ensure that they are aware of the current performance of their NPUs, and hence whether conditions within the working enclosure 3 and safety outside the working enclosure 3 are being correctly maintained.

This first embodiment of the present invention may also be fitted with local alarm control. If the current volumetric airflow, as determined above, falls outside pre-set limits, suggesting a filter blockage or other malfunction, visible and audible alarms are triggered; other undesirable conditions can lead to further alarms being triggered similarly.

One minor drawback of the first embodiment of the present invention, described above, is the cost of the array of *eighteen* hot film thermistor airflow sensors 18 fitted to the airflow sensor support plate 14. These give very accurate results, but it has been found that with careful design a sufficient degree of accuracy can be achieved with as little as a single hot film thermistor airflow sensor 18. It is also not essential to provide a separate airflow sensor support plate 14.

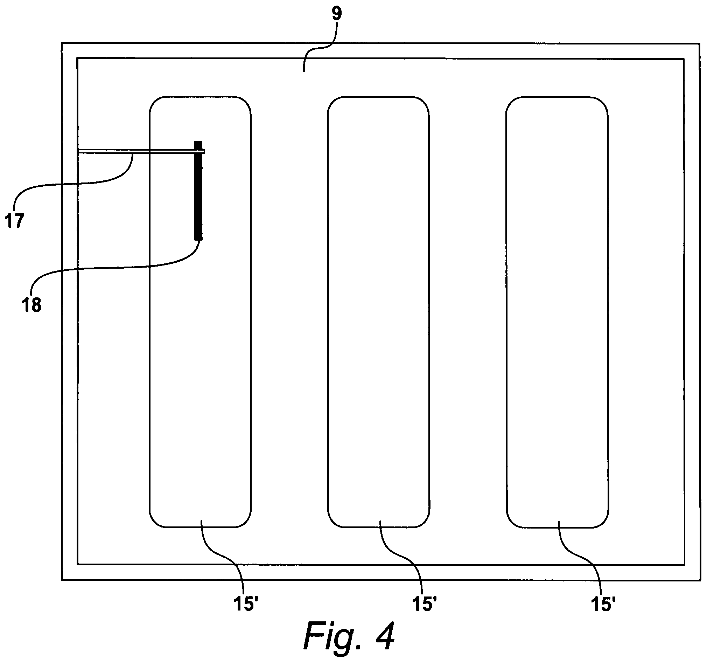

A second embodiment of the present invention thus closely resembles the first, but instead of the airflow sensor support plate 14 arrangement shown in Figure 3, the arrangement shown in Figure 4 is used instead. As referred to above, the standard configuration of HEPA filter 9 is provided with three parallel elongate outflow apertures 15' extending across its outflow face, with the same geometry as the elongate apertures 15 in the airflow sensor support plate 14. For a single airflow sensor 18, it is possible to mount the sensor 18 on a suitable sensor support bracket 17 from a casing or mounting of the HEPA filter 9, as shown in Figure 4. To reduce the risk of turbulence, the bracket 17 and sensor 18 may be located spaced slightly down-flow from the outflow of the HEPA filter (9).

In this embodiment, the preferred position of the single sensor 18 can be determined as follows. With the airflow sensor support plate 14 fitted, it is possible to determine the local airflow velocity at eighteen points across the outflow of the HEPA filter 9, as well as an overall average airflow velocity. It is hence possible to identify which sensor 18 position provides a local airflow velocity that best corresponds to the overall average airflow velocity, as well as establishing which positions across the outflow from the HEPA filter 9 are most consistent and fluctuate least. On this basis, it is possible to select a single representative sensor 18 position that provides in magnitude and reliability the best proxy signal for the overall average airflow velocity from the full array of eighteen sensors 18. Thus, if a single sensor 18 is located at this representative point, the local airflow velocity signal from this sensor alone can be used in calculations, in place of the overall average airflow velocity, to provide a very close approximation to the volumetric airflow through the NPU 6.

As is shown in Figure 4, this representative point is typically located away from a centreline of the outflow of the HEPA filter 9 and near to, but not at its periphery. (The single sensor 18 can be located elsewhere, across the face of the HEPA filter 9, at the loss of some accuracy, as will be set out in respect of the third embodiment below.)

This arrangement allows for the volumetric airflow to be determined to a sufficient degree of accuracy with a single sensor, thus making the second embodiment of the present invention significantly less costly that the first.

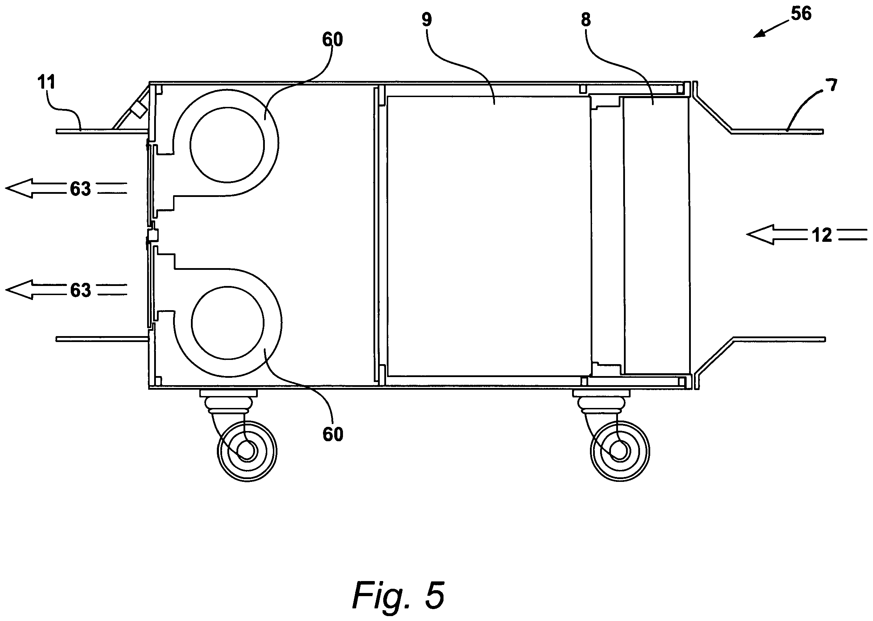

Figure 5 shows a second form of NPU 56 which comprises a third embodiment of the present invention. In most respects, the second NPU 56 is the same as the first NPU 6, having an inlet 7 connectable to the working enclosure 3, through which an inwards airflow 12 passes *en route* to a pre-filter 8 and a HEPA filter 9. However, instead of the single extractor fan 10 of the first NPU 6, the second NPU 56 has a pair of fans 60. As a practical matter, it is found that certain types and models of fan 10 are highly suitable for use in NPUs, due to their combination of power, size, compact configuration and so forth. If it is desired to provide a larger NPU 56 having a greater air-moving capacity than the first NPU 6, it is customary simply to fit two such fans, ideally as a pair 60, as shown schematically in Figure 5.

This leads, however, to an unexpected problem. Rather than a single outwards airflow 13, as in Figure 2, the second NPU 56 tends to produce two outwards airflows 63, as shown in Figure 5. When both fans 60 are in operation, this is not a problem. However, the larger second NPU 56 may well be used at half capacity with only one of the fans 60 in operation. This leads to a risk of inflow of air past the inoperative fan 60, potentially spoiling all the carefully established and calculated airflows within the NPU 56, and in particular greatly reducing the inwards airflow 12, without this necessarily showing up in the overall volumetric airflow measured and calculated.

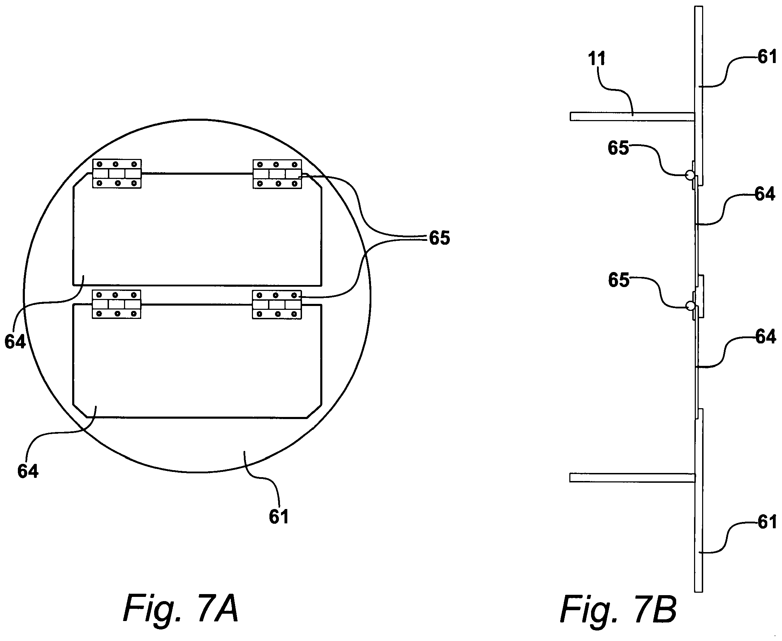

To avoid such a backdraft being established, backdraft shutters 64 are fitted to the second NPU 56, as shown in Figures 7A and 7B. There are also situations in which such a backdraft shutter 54 would be of benefit in the first NPU 6, as shown in Figures 6A and 6B. Each shutter 54, 64 is mounted to cover a corresponding aperture through an end bulkhead 61 of the respective NPU 6, 56. The single shutter 54 of Figures 6A, 6B is mounted in line with the outward airflow 13 of the single fan 10, while the pair of shutters 64 of Figures 7A, 7B are each mounted in line with a respective one of the pair of fans 60 and its respective outwards airflow 63. The shutters 54, 64 are pivoted on respective hinges 55, 65 along their upper edges, such that when the respective fan 10, 60 is operating to expel its outwards airflow 13, 63, the shutter 54, 64 pivots upwardly and outwardly to allow the airflow 13, 63 to exit. However, gravity will return the shutters 54, 64 to a closed disposition if the airflow 13, 63 ceases. It is also found that if the shutters 54, 64 are constructed to seal well against a rim or seat of the respective aperture in the bulkhead 61, then any underpressure within the NPU 6, 56 will suck the shutter 54, 64 firmly closed against its seat, creating a seal and preventing any subsequent inflow of air.

It is believed that such backdraft shutter arrangements would be of use not only with the NPUs of the present invention but also with other air-moving units in which backdrafts would be undesirable.

A fourth embodiment of the present invention is intended to be retrofitted to existing NPU equipment with minimal expense and maximum convenience. An airflow sensor support plate 14 as shown in Figure 3 may be installed to an outflow of the HEPA filter 9 of an existing NPU 6, generally as shown in Figure 2. The same array of hot film thermistor airflow sensors 18 as in the first embodiment is thus established across the airflow emerging from the HEPA filter 9, and the same data on volumetric airflow, etc., can be calculated. Alternatively, a single hot film thermistor airflow sensor 18 as shown in Figure 4 is installed to the outflow of the HEPA filter 9, and the arrangements of the second embodiment are used to monitor the volumetric airflow.

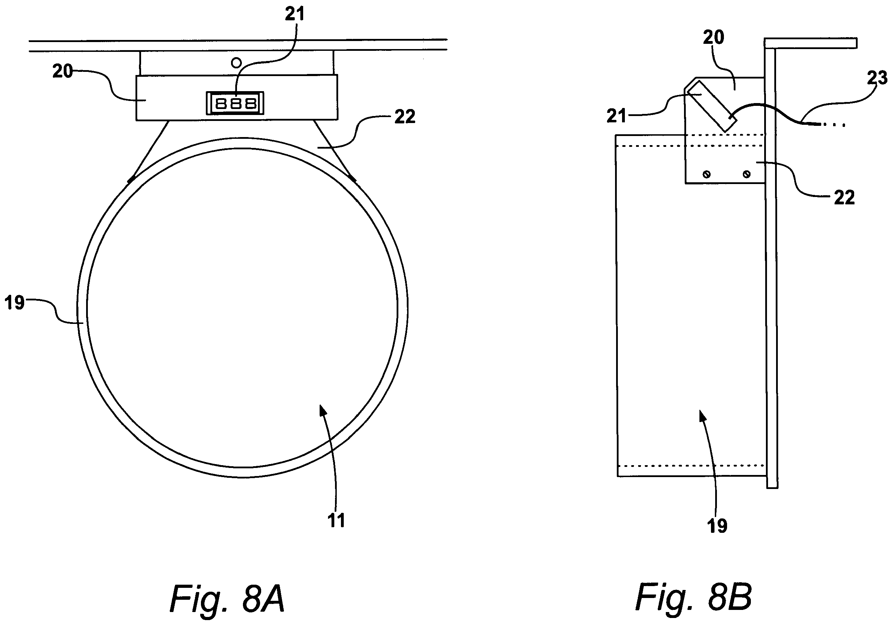

As shown in Figures 8A and 8B, the fourth embodiment also comprises a retrofitted monitor module 20. The outlet 11 of an NPU 6 is conventionally surrounded by a cylindrical outlet spigot 19, with a standard diameter of 300mm. The monitor module 20 has a fairing 22 that is profiled to fit on top of the outlet spigot, held in place with two pair of screws, with the monitor module 20 also being held to a bulkhead of the NPU unit 6 by a further screw. The monitor module 20 contains a digital panel meter 21 to display the airflow data, etc., which is linked to the sensors 18 within the NPU 6 by cabling 23, which is run through the bulkhead of the NPU 6.

This provides the retrofitted NPU of the fourth embodiment with all the functionality of the NPUs 6 of the first or second embodiments, in which the digital panel meter is part of the existing OEM control or display panel.

In a fifth embodiment of the present invention (not illustrated), a related system is provided for the calibration and on-site testing of NPUs not having control arrangements as described above. A remote airflow monitor is provided that acts as a calibrated standalone measuring system for use on-site. It comprises a roving head case comprising an instrument panel fitted with a digital panel meter, and also fitted with a multipoint array of sensors, ideally hot film thermistor airflow sensors 18 as described above. The array of sensors may be presented to an inflow or outflow of the NPU, and a set of airflow velocity data can be converted into a volumetric airflow as described above. This equipment can be powered by a mains power lead or a rechargeable battery, but ideally an airflow-powered DC electrical generator can be used.

## Claims

1. Apparatus (6, 56) for extracting and filtering asbestos from air from within a working enclosure (3), comprising means (10) to extract air from said working enclosure (3), filter means (8, 9) through which said air is passed, and at least one airflow sensor means (18) arranged to measure a local airflow velocity at a point in an outflow (14) of said filter means (8, 9), **characterised in that** the apparatus (6, 56) further comprises means to determine from said local airflow velocity an overall volumetric airflow through the apparatus (6).

2. Apparatus (6, 56) as claimed in claim 1, **characterised in that** it comprises a single said airflow sensor means (18) arranged to measure the local airflow velocity at a preselected representative point in the outflow (14) of said filter means (8, 9).

3. Apparatus (6, 56) as claimed in claim 2, **characterised in that** the preselected representative point, at which the single airflow sensor means (18) measures the local airflow velocity, is located at a point intermediate between a centreline and a periphery of the outflow (14) of the filter means (8, 9), optionally at a point closer to said periphery than to said centreline.

4. Apparatus (6, 56) as claimed in claim 1, **characterised in that** it comprises a plurality of airflow sensor means (18) arrayed to measure local airflow velocities at a plurality of points extending across the outflow (14) of the filter means (8, 9), and means to calculate an average airflow velocity from said local airflow velocities and to calculate the overall volumetric airflow through the apparatus (6, 56) from said average airflow velocity.

5. Apparatus (6, 56) as claimed in any one of the preceding claims, **characterised in that** the or each airflow sensor means (18) comprises hot-film anemometer means (18).

6. Apparatus (6, 56) as claimed in any one of the preceding claims, **characterised in that** the filter means (8, 9) comprises HEPA (High Efficiency Particulate Arrestance) filter means (9).

7. Apparatus (6, 56) as claimed in claim 6, **characterised in that** the filter means (8, 9) further comprises pre-filter means (8), and an airflow through the apparatus (6, 56) is passed through the pre-filter means (8) before said airflow is passed through the HEPA filter means (9).

8. Apparatus (6, 56) as claimed in any one of the preceding claims, **characterised in that** the means (10) to extract air from the working enclosure (3) comprises one or more extractor fan means (10, 60).

9. Apparatus (6, 56) as claimed in claim 8, **characterised in that** the apparatus (6, 56) is provided with one or more shutter means (54, 64), the (54) or each (64) shutter means being associated with respective extractor fan means (10, 60) and being adapted to seal an outflow of said extractor fan means (10, 60) against inflow of air when said extractor fan means (10, 60) is not in operation.

10. Apparatus (6, 56) as claimed in any one of the preceding claims, **characterised in that** the or each airflow sensor means (18) is located in the outflow (14) of the filter means (8, 9) between the filter means (8, 9) and the means (10) to extract air.

11. A method of measuring volumetric airflow through apparatus (6, 56) for extracting and filtering asbestos from air from within a working enclosure (3), said apparatus (6, 56) comprising filter means (8, 9) through which said air is passed, wherein the method comprises the the step of providing at least one airflow sensor means (18) arranged to measure local airflow velocity at a point on an outflow of said filter means (8, 9); and **characterised in that** it comprises the step of calculating an overall volumetric airflow through the apparatus (6, 56) from said local airflow velocity.

12. A method as claimed in claim 11, **characterised in that** it comprises the steps of: providing a single said airflow sensor means (18) arranged to measure the local airflow at a preselected representative point in the outflow of said filter means (8, 9); and calculating the overall volumetric airflow through the apparatus (6, 56) from said local airflow velocity.

13. A method as claimed in either claim 11 or claim 12, **characterised in that** it comprises the steps of: providing a plurality of airflow sensor means (18) arranged to measure local airflow velocities at a plurality of points extending across the outflow of said filter means (8, 9); calculating an average airflow velocity from said local airflow velocities at said plurality of points; and calculating the overall volumetric airflow from said average airflow velocity.

14. A method as claimed in claim 13, **characterised in that** it comprises the steps of: comparing the average airflow velocity with the respective local airflow velocity at each of said plurality of points extending across the outflow of the filter means (8, 9); and thereby selecting said representative point for a single said airflow sensor (18) as having a local airflow velocity most representative of the average airflow velocity.

15. A method as claimed in any one of claims 11 to 14, **characterised in that** it comprises the step of providing apparatus as claimed in any one of claims 1 to 10.

## Patentansprüche

1. Einrichtung (6, 56) zum Absaugen und Filtern von Asbest aus der Luft aus dem Inneren einer Arbeitskabine (3), Folgendes umfassend: ein Mittel (10) zum Absaugen von Luft aus der Arbeitskabine (3), ein Filtermittel (8, 9), durch das die Luft durchgeleitet wird, und wenigstens ein Luftstromsensormittel (18), das angeordnet ist, eine örtliche Luftstromgeschwindigkeit an einem Punkt in einem Ausfluss (14) des Filtermittels (8, 9) zu messen, **dadurch gekennzeichnet, dass** die Einrichtung (6, 56) ferner ein Mittel zum Bestimmen eines volumetrischen Gesamtluftstroms durch die Einrichtung (6) von der örtlichen Luftstromgeschwindigkeit umfasst.

2. Einrichtung (6, 56) nach Anspruch 1, **dadurch gekennzeichnet, dass** sie ein einzelnes des Luftstromsensormittels (18) umfasst, das angeordnet ist, um die örtliche Luftstromgeschwindigkeit an einem vorausgewählten repräsentativen Punkt in dem Ausfluss (14) des Filtermittels (8, 9) zu messen.

3. Einrichtung (6, 56) nach Anspruch 2, **dadurch gekennzeichnet, dass** der vorausgewählte repräsentative Punkt, an dem das einzelne Luftstromsensormittel (18) die örtliche Luftstromgeschwindigkeit misst, an einem Punkt zwischen einer Mittellinie und einem Umfang des Ausflusses (14) des Filtermittels (8, 9), optional an einem Punkt näher an dem Umfang als an der Mittellinie platziert ist.

4. Einrichtung (6, 56) nach Anspruch 1, **dadurch gekennzeichnet, dass** sie mehrere Luftstromsensormittel (18), die aufgereiht sind, um örtliche Luftstromgeschwindigkeiten an mehreren Punkten, die sich über den Ausfluss (14) der Filtermittel (8, 9) erstrecken, zu messen und ein Mittel zum Berechnen einer durchschnittlichen Luftstromgeschwindigkeit von den örtlichen Luftstromgeschwindigkeiten und zum Berechnen des volumetrischen Gesamtluftstroms durch die Einrichtung (6, 56) von der durchschnittlichen Luftstromgeschwindigkeit umfasst.

5. Einrichtung (6, 56) nach einem der vorhergehenden Ansprüche, **dadurch gekennzeichnet, dass** das oder jedes Luftstromsensormittel (18) ein Heißfilm-Anemometermittel (18) umfasst.

6. Einrichtung (6, 56) nach einem der vorhergehenden Ansprüche, **dadurch gekennzeichnet, dass** das Filtermittel (8, 9) ein Absolutfiltermittel (9) (*High Efficiency Particulate Arrestance* - HEPA) umfasst.

7. Einrichtung (6, 56) nach Anspruch 6, **dadurch gekennzeichnet, dass** das Filtermittel (8, 9) ferner ein Vorfiltermittel (8) umfasst und ein Luftstrom durch die Einrichtung (6, 56) durch das Vorfiltermittel (8) durchgeleitet wird, bevor der Luftstrom durch das HEPA-Filtermittel (9) durchgeleitet wird.

8. Einrichtung (6, 56) nach einem der vorhergehenden Ansprüche, **dadurch gekennzeichnet, dass** das Mittel (10) zum Absaugen von Luft aus der Arbeitskabine (3) ein oder mehrere Sauglüftermittel (10, 60) umfasst.

9. Einrichtung (6, 56) nach Anspruch 8, **dadurch gekennzeichnet, dass** die Einrichtung (6, 56) mit einem oder mehreren Verschlussklappenmitteln (54, 64) versehen ist, wobei das (54) oder jedes (64) Verschlussklappenmittel mit dem entsprechenden Sauglüftermittel (10, 60) verknüpft ist und angepasst ist, um einen Ausfluss des Sauglüftermittels (10, 60) gegen den Einfluss von Luft, wenn das Sauglüftermittel (10, 60) nicht in Betrieb ist, abzudichten.

10. Einrichtung (6, 56) nach einem der vorhergehenden Ansprüche, **dadurch gekennzeichnet, dass** das oder jedes Luftstromsensormittel (18) in dem Ausfluss (14) des Filtermittels (8, 9) zwischen dem Filtermittel (8, 9) und dem Mittel (10) zum Absaugen von Luft platziert ist.

11. Verfahren zum Messen eines volumetrischen Luftstroms durch die Einrichtung (6, 56) zum Absaugen und Filtern von Asbest von der Luft aus dem Inneren einer Arbeitskabine (3), wobei die Einrichtung (6, 56) ein Filtermittel (8, 9) umfasst, durch das Luft durchgeleitet wird, wobei das Verfahren den Schritt des Bereitstellens wenigstens eines Luftstromsensormittels (18) umfasst, das angeordnet ist, um eine örtliche Luftstromgeschwindigkeit an einem Punkt an einem Ausfluss des Filtermittels (8, 9) zu messen; und **dadurch gekennzeichnet ist, dass** es den Schritt des Berechnens eines volumetrischen Gesamtluftstroms durch die Einrichtung (6, 56) von der örtlichen Luftstromgeschwindigkeit umfasst.

12. Verfahren nach Anspruch 11, **dadurch gekennzeichnet, dass** es die folgenden Schritte umfasst: Bereitstellen eines einzelnen des Luftstromsensormittels (18), das angeordnet ist, den örtlichen Luftstrom an einem vorausgewählten repräsentativen Punkt in dem Ausfluss des Filtermittels (8, 9) zu messen; und Berechnen des volumetrischen Gesamtluftstroms durch die Einrichtung (6, 56) von der örtlichen Luftstromgeschwindigkeit.

13. Verfahren entweder nach Anspruch 11 oder 12, **dadurch gekennzeichnet, dass** es die folgenden Schritte umfasst: Bereitstellen mehrerer Luftstromsensormittel (18), die angeordnet sind, die örtlichen Luftstromgeschwindigkeiten an mehreren Punkten zu messen, die sich über den Ausfluss des Filtermittels (8, 9) erstrecken; Berechnen einer durchschnittlichen Luftstromgeschwindigkeit von den örtlichen Luftstromgeschwindigkeiten an den mehreren Punkten; und Berechnen des volumetrischen Gesamtluftstroms von der durchschnittlichen Luftstromgeschwindigkeit.

14. Verfahren nach Anspruch 13, **dadurch gekennzeichnet, dass** es die folgenden Schritte umfasst: Vergleichen der durchschnittlichen Luftstromgeschwindigkeit mit der entsprechenden örtlichen Luftstromgeschwindigkeit an jedem der mehreren Punkte, die sich über den Ausfluss des Filtermittels (8, 9) erstrecken; und dadurch Auswählen des repräsentativen Punktes für einen einzelnen des Luftstromsensors (18) als eine örtliche Luftstromgeschwindigkeit aufweisend, die die durchschnittliche Luftstromgeschwindigkeit am stärksten repräsentiert.

15. Verfahren nach einem der Ansprüche 11 bis 14, **dadurch gekennzeichnet, dass** es den Schritt des Bereitstellens einer Einrichtung nach einem der Ansprüche 1 bis 10 umfasst.

## Revendications

1. Appareil (6, 56) destiné à extraire et filtrer l'amiante de l'air provenant de l'intérieur d'une enceinte de travail (3), comprenant un moyen (10) pour extraire l'air de ladite enceinte de travail (3), un moyen de filtre (8, 9) à travers lequel ledit air passe, et au moins un moyen de capteur d'écoulement d'air (18) conçu pour mesurer une vitesse d'écoulement d'air local au niveau d'un point dans un écoulement sortant (14) dudit moyen de filtre (8, 9), **caractérisé en ce que** l'appareil (6, 56) comprend en outre un moyen pour déterminer à partir de ladite vitesse d'écoulement d'air local un écoulement d'air volumétrique global à travers l'appareil (6).

2. Appareil (6, 56) selon la revendication 1, **caractérisé en ce qu'**il comprend un dit moyen de capteur d'écoulement d'air (18) unique conçu pour mesurer la vitesse d'écoulement d'air local au niveau d'un point représentatif présélectionné dans l'écoulement sortant (14) dudit moyen de filtre (8, 9).

3. Appareil (6, 56) selon la revendication 2, **caractérisé en ce que** le point représentatif présélectionné, au niveau duquel le moyen de capteur d'écoulement d'air (18) unique mesure la vitesse d'écoulement d'air local, est situé au niveau d'un point intermédiaire entre une ligne centrale et une périphérie de l'écoulement sortant (14) du moyen de filtre (8, 9), facultativement au niveau d'un point plus près de ladite périphérie que de ladite ligne centrale.

4. Appareil (6, 56) selon la revendication 1, **caractérisé en ce qu'**il comprend une pluralité de moyens de capteur d'écoulement d'air (18) agencés pour mesurer des vitesses d'écoulement d'air local au niveau d'une pluralité de points s'étendant à travers l'écoulement sortant (14) du moyen de filtre (8, 9), et un moyen pour calculer une vitesse d'écoulement d'air moyenne à partir desdites vitesses d'écoulement d'air local et pour calculer l'écoulement d'air volumétrique global à travers l'appareil (6, 56) à partir de ladite vitesse d'écoulement d'air moyenne.

5. Appareil (6, 56) selon l'une quelconque des revendications précédentes, **caractérisé en ce que** le ou chaque moyen de capteur d'écoulement d'air (18) comprend un moyen d'anémomètre à film chaud (18).

6. Appareil (6, 56) selon l'une quelconque des revendications précédentes, **caractérisé en ce que** le moyen de filtre (8, 9) comprend un moyen de filtre HEPA (haut pouvoir filtrant pour les particules) (9).

7. Appareil (6, 56) selon la revendication 6, **caractérisé en ce que** le moyen de filtre (8, 9) comprend en outre un moyen de préfiltre (8), et un écoulement d'air à travers l'appareil (6, 56) passe à travers le moyen de préfiltre (8) avant que ledit écoulement d'air passe à travers le moyen de filtre HEPA (9).

8. Appareil (6, 56) selon l'une quelconque des revendications précédentes, **caractérisé en ce que** le moyen (10) pour extraire l'air de l'enceinte de travail (3) comprend un ou plusieurs moyens de ventilateur extracteur (10, 60).

9. Appareil (6, 56) selon la revendication 8, **caractérisé en ce que** l'appareil (6, 56) est pourvu d'un ou de plusieurs moyens d'obturateur (54, 64), le moyen d'obturateur (54) ou chaque moyen d'obturateur (64) étant associé à un moyen de ventilateur extracteur (10, 60) respectif et étant adapté pour assurer l'étanchéité d'un écoulement sortant dudit moyen de ventilateur extracteur (10, 60) vis-à-vis d'un écoulement entrant d'air lorsque ledit moyen de ventilateur extracteur (10, 60) n'est pas en fonctionnement.

10. Appareil (6, 56) selon l'une quelconque des revendications précédentes, **caractérisé en ce que** le ou chaque moyen de capteur d'écoulement d'air (18) est situé dans l'écoulement sortant (14) du moyen de filtre (8, 9) entre le moyen de filtre (8, 9) et le moyen (10) pour extraire l'air.

11. Procédé de mesure d'écoulement d'air volumétrique à travers un appareil (6, 56) destiné à extraire et filtrer l'amiante de l'air provenant d'une enceinte de travail (3), ledit appareil (6, 56) comprenant un moyen de filtre (8, 9) à travers lequel ledit air passe, dans lequel le procédé comprend l'étape de
fourniture d'au moins un moyen de capteur d'écoulement d'air (18) conçu pour mesurer une vitesse d'écoulement d'air local au niveau d'un point sur un écoulement sortant dudit moyen de filtre (8, 9) ; et **caractérisé en ce qu'**il comprend l'étape de
calcul d'un écoulement d'air volumétrique global à travers l'appareil (6, 56) à partir de ladite vitesse d'écoulement d'air local.

12. Procédé selon la revendication 11, **caractérisé en ce qu'**il comprend les étapes de :
fourniture d'un moyen de capteur d'écoulement d'air (18) unique conçu pour mesurer l'écoulement d'air local au niveau d'un point représentatif présélectionné dans l'écoulement sortant dudit moyen de filtre (8, 9) ; et calcul de l'écoulement d'air volumétrique global à travers l'appareil (6, 56) à partir de ladite vitesse d'écoulement d'air local.

13. Procédé selon la revendication 11 ou la revendication 12, **caractérisé en ce qu'**il comprend les étapes de : fourniture d'une pluralité de moyens de capteur d'écoulement d'air (18) conçus pour mesurer des vitesses d'écoulement d'air local au niveau d'une pluralité de points s'étendant à travers l'écoulement sortant dudit moyen de filtre (8, 9) ; calcul d'une vitesse d'écoulement d'air moyenne à partir desdites vitesses d'écoulement d'air local au niveau de ladite pluralité de points ; et calcul de l'écoulement d'air volumétrique global à partir de ladite vitesse d'écoulement d'air moyenne.

14. Procédé selon la revendication 13, **caractérisé en ce qu'**il comprend les étapes de :
comparaison de la vitesse d'écoulement d'air moyenne avec la vitesse d'écoulement d'air local respective au niveau de chacun de ladite pluralité de points s'étendant à travers l'écoulement sortant du moyen de filtre (8, 9) ; et ainsi sélection dudit point représentatif pour un dit capteur d'écoulement d'air (18) unique comme ayant une vitesse d'écoulement d'air local la plus représentative de la vitesse d'écoulement d'air moyenne.

15. Procédé selon l'une quelconque des revendications 11 à 14, **caractérisé en ce qu'**il comprend l'étape de fourniture d'un appareil tel que revendiqué dans l'une quelconque des revendications 1 à 10.
